# EUROPÄISCHE PATENTSCHRIFT

(11) **EP 1 707 855 B1**
(45) Veröffentlichungstag und Bekanntmachung des Hinweises auf die Patenterteilung: **30.11.2011**
(21) Anmeldenummer: 06005464.0
(22) Anmeldetag: 17.03.2006
(51) Int. Cl.: F16J 15/08

(54) **Bauteil, insbesondere Dicht- und/oder Abschirmteil**
Component, in particular sealing and/or protection piece
Elément, en particulier pièce d'étanchéité et/ou de protection

(30) Priorität: 02.04.2005 DE 102005015247
(43) Veröffentlichungstag der Anmeldung: 04.10.2006
(73) Patentinhaber: ElringKlinger AG, 72581 Dettingen (DE)
(72) Erfinder: Leckebusch, Herbert, 72581 Dettingen/Erms (DE); Schnaufer, Kurt, 72766 Reutlingen (DE); Vial, Freidhelm, 72766 Reutlingen (DE)
(74) Vertreter: Hoeger, Stellrecht & Partner Patentanwälte

(56) Entgegenhaltungen:
- DE-A1- 19 822 772
- DE-C1- 19 823 115
- US-A1- 2004 046 332

## Beschreibung

Die Erfindung betrifft ein Bauteil, insbesondere Dicht- und/oder Abschirmteil, bestehend aus zumindest teilweise übereinanderliegenden Flächenteilen, die zumindest teilweise mittels mindestens einer Verbindungseinrichtung miteinander verbunden sind.

Während die Wärmeentwicklung beispielsweise eines sparsamen leistungsoptimierten Dieselmotors am Zylinderkurbelwellengehäuse sehr gering sein kann, gilt das für "heiße Zonen", wie bei Krümmer, Turbolader, Katalysator etc., keineswegs. Durch die immer kompaktere Konstruktion der Motoren geraten zunehmend Komponenten in enge Nachbarschaft, die thermisch nicht "kompatibel" sind. Demgemäß ist es notwendig, mit sogenannten Abschirmteilen, wie Hitzeschildern, thermische Motorenkomponenten gegenüber angrenzenden wärmeempfindlichen Aggregaten, wie Sensoren, Kraftstoffleitungen, Druckdosen, Karosserieteilen etc., zu schützen. Die Situation wird durch den Kompaktbau auch insofern verschärft, dass die hohe Packungsdichte der Aggregate den kühlenden Luftstrom im Motorraum einengt. Auch Lärmschutzmaßnahmen können dazu mit beitragen. So können beispielsweise Kunststoffbodenplatten, die den Schallaustritt vom Motorraum zur Fahrbahn vermindern sollen, unter Umständen eine wirkungsvolle Isolation erzeugen, mit der Wärme im Motorraum eingeschlossen wird. Katalysatoren zählen wegen ihrer phasenweisen hohen Oberflächentemperatur zu den Hitzequellen, die den Einsatz von schützenden Schildbarrieren jedenfalls erforderlich machen können (Neue Werkstoffe und Entwicklungs-Tools für den Hitzeschutz im MTZ 12/2001, Jahrgang 72, Seite 1044ff).

Durch die DE 102 47 641 B3 ist ein dahingehendes Abschirmteil als schalldämmendes Hitzeschild für eine Anwendung bei Kraftfahrzeugen bekannt. Um bei dem bekannten Bauteil die Schalldämmung zu verbessern, besteht dieses aus zumindest teilweise übereinanderliegenden, flächig ausgebildeten Schirmteilen, die zwischen sich eine isolierende Zwischenschicht aufnehmen und die zur festen Verbindung miteinander außenumfangsseitig entlang einer gemeinsamen Verbindungslinie miteinander verbunden sind, indem als Verbindungseinrichtung in der Art einer Umbördelung das eine Schirmteil unter Übergriff der isolierenden Zwischenschicht das andere Schirmteil in demselben Übergriff umfasst.

Die dahingehend bekannte Formschlussverbindung legt die einzelnen Lagen oder Schirmteile relativ zueinander unbewegbar fest und aufgrund der derart starr hergestellten Verbindung kann es insbesondere bei thermischen Ausdehnungsvorgängen für das Abschirmteil zu Problemen bei dessen Festlegung kommen, insbesondere, wenn das Abschirmteil über randseitig angreifende, winkelförmige Bügelschenkel innerhalb des Motorraumes an dortigen feststehenden Teilen starr festgelegt ist. Neben einem eventuellen Aufwerfen des mehrlagigen, abschirmenden Bauteils mit gegebenenfalls Beulen und Einreißen des Hitzeschildmaterials, was zum Versagen desselben führen kann, ist auch nicht auszuschließen, dass die winkelförmigen Bügelschenkel als Festlegemittel sich über die vorgesehene Schraubverbindung von den zugeordneten Motorenbaukomponenten lösen und dergestalt das Bauteil freigeben, was wiederum entsprechende Reparatur- und Wartungsarbeiten nach sich ziehen kann. Auch ist die bekannte Lösung teuer in der Realisierung, da die Umbördelung arbeits- und kostenintensiv ist. Ferner sind beim Einbau des bekannten Bauteils in Kraftfahrzeuge die winkelförmigen Bügelschenkel zusätzlich bereit zu stellen, was auch insoweit den Montageaufwand in Produktionslinien von Kraftfahrzeugen und Kraftfahrzeugmotoren erhöht.

Durch die EP-A-1 298 365 ist eine metallische Zylinderkopfdichtung als Bauteil bekannt mit einer mindestens eine Brennraumöffnung als Durchgangsöffnung aufweisenden Dichtungsplatte als Dichtungseinheit, welche mindestens zwei aneinanderliegende Metallblechlagen als Flächenteile aufweist, von denen eine erste mit mindestens einer elastisch höhenverformbaren, die Brennraumöffnung umschließenden Sicke und eine zweite mit mindestens einer die Sickenverformung begrenzenden, die Brennraumöffnung umgebenden Verformungsbegrenzungseinrichtung versehen ist.

Durch die WO 01/96768 ist des weiteren eine als Flachdichtung ausgebildete Zylinderkopfdichtung bekannt mit metallischen Einzellagen als Flächenteile, in denen mindestens eine Durchgangsöffnung (Brennraumöffnung) ausgebildet ist. Diese oder zumindest eine der metallischen Lagen ist zumindest bereichsweise in Form einer wellen- oder sägezahnförmigen Profilierung um die jeweilige Brennraumöffnung ausgebildet, wobei zumindest die Lage, in der die Profilierung ausgebildet ist, aufgrund der benötigten sehr hohen Elastizitätsgrenzen aus einem Federstahl zu bestehen hat, wobei die Profilierung eine Verformungsbegrenzungseinrichtung für eine zusätzlich ausgebildete Sicke aufweist.

Die US 2004/0046332 A1 offenbart ein Bauteil gemäß dem Oberbegriff des Anspruchs 1, wobei insbesondere die Verbindungseinrichtung einerseits eine zumindest teilweise aus dem einem Flächenteil ausgebogene Federzunge umfasst und andererseits im anderen Flächenteil ein Aussparung, welche die Federzunge durchgreift.

Die beschriebenen Dichtsystemteile in Form der Zylinderkopfdichtungen werden randseitig mittels einer Verbindungseinrichtung regelmäßig in Form von Eingriffsschrauben an den zuordenbaren Motorenbaukomponenten festgelegt. Kommt es im Betrieb dahingehender Dichtungen zu einer Erwärmung des flächigen Blechmaterials, dehnen sich die Einzellagen unter dem Wärmeeinfluss entsprechend aus, gegebenenfalls sogar in unterschiedlichem Maße, was zu Wärmespannungen im Material führt mit der Folge, dass die angestrebte Dichtfunktion beeinträchtigt werden kann oder es gar zu einem Versagen der Zylinderkopfdichtung an besonders beanspruchten Bereichen im lang andauernden Betrieb kommt.

Ausgehend von diesem Stand der Technik liegt der Erfindung die Aufgabe zugrunde, die bekannten Lösungen unter Beibehalten ihrer Vorteile dahingehend weiter zu verbessern, dass auch bei starker thermischer Beanspruchung ein funktionssicherer Gebrauch sichergestellt ist und dass sich die Lösung kostengünstig realisieren lässt bei gleichzeitig verringerter Wartungsintensität.

Diese Aufgabe wird durch ein Bauteil mit den Merkmalen des Patentanspruches 1 gelöst.

Dadurch, dass die jeweilige Verbindungseinrichtung an einem Flächenteil festgelegt das andere Flächenteil derart durchgreift und mit diesem in Eingriff steht, dass zumindest teilweise die Flächenteile um mindestens eine Ausgleichsstrecke relativ gegeneinander entlang von Verschieberichtungen verschiebbar gehalten sind, ist eine starre Verbindung der einzelnen Flächenteile, wie im Stand der Technik aufgezeigt, vermieden und vielmehr können die Flächenteile nun in Abhängigkeit von der thermischen Situation gegenseitig aneinander "abgleiten", ohne dass hierdurch eine verlässliche Verbindung über die Verbindungseinrichtung beeinträchtigt wäre. Aufgrund der zugelassenen relativen Verschiebebewegung der Flächenteile zueinander um eine jeweilige Ausgleichsstrecke ist ein thermischer Ausgleich geschaffen, der die Einleitung von Kraft- oder Spannungsspitzen im festgelegten Montagezustand vermeiden hilft, so dass die Verbindung entlastet ist, was einen funktionssicheren, lang andauernden Betrieb des Bauteils gewährleistet und Wartungs- oder Reparaturintervalle reduzieren hilft.

Sofern das erfindungsgemäße Bauteil vorzugsweise zumindest teilweise als Abschirmteil, insbesondere in der Art eines Hitzeschildes konzipiert ist, lassen sich aufgrund der zugelassenen relativen Verschiebebewegung der Flächenteile zueinander Beuleffekte an den Schirmteilen vermeiden und diese reißen nicht ein; auch nicht im Bereich ihrer Festlegung an sonstigen Maschinen- oder Fahrzeugteilen. Da bei jeder thermischen Situation und in jedem Festlegezustand die reibschlüssige Verbindung der Flächenteile mit der jeweiligen Verschiebemöglichkeit erhalten bleibt, lässt sich durch das erfindungsgemäße Bauteil dieses auch in solchen hoch thermisch beanspruchten Zonen lang andauernd einsetzen, beispielsweise unmittelbar im Dichtungsbereich einer Zylinderkopfdichtung, wo der bisherige Einsatz von dahingehenden Bauteilen mit Hitzeschildwirkung nicht ohne weiteres möglich war. Unabhängig hiervon lässt sich das Bauteil auch ausschließlich als Dichtteil, beispielsweise in der Art einer Zylinderkopfdichtung oder in der Art einer Abgasdichtung, zwischen dem Kopf eines Motors und dem Krümmer eines Abgassystems einsetzen und die auftretenden Wärmedehnungen und Spannungen werden wiederum dadurch kompensiert, dass die beanspruchte Verbindungseinrichtung die Flächenteile um mindestens eine Ausgleichsstrecke gegeneinander abgleiten lässt, vorzugsweise entlang von definiert vorgegebenen Verschieberichtungen, um dergestalt nicht nur die Dichtung selbst zu entlasten, sondern auch die weiteren Verbindungsstellen, mit denen das Bauteil mit den sonstigen Motoren- oder Maschinenkomponenten verbunden ist.

Die erfindungsgemäße Bauteillösung benötigt wenig Einbauraum und die Verbindungseinrichtung lässt sich in kostengünstiger Weise herstellen.

Erfindungsgemäß ist vorgesehen, dass die jeweilige Verbindungseinrichtung ein Verbindungsteil aufweist, das aus dem jeweiligen einen Flächenteil gebildet einstückiger Bestandteil desselben ist, wobei das Verbindungsteil eine zugeordnete Aussparung im anderen Flächenteil durchgreift und des weiteren das Verbindungsteil aus einer Art Federzunge besteht, die zumindest teilweise aus dem einen Flächenteil ausgebogen ist und das Ansteuerteil besteht aus einem Quersteg, der die Aussparung zumindest teilweise quer zur Längsausrichtung des Verbindungsteils durchgreift. Aufgrund dieser Ausgestaltung ist zumindest in einer Ausgangslage, bei der die Relativbewegung der Flächenteile zueinander Null ist oder gegen Null geht, eine Verrastung der Flächenteile zueinander erreichbar, was zum einen das Zusammenfügen der Flächenteile während der Montage erleichtert und des weiteren ist dergestalt ein Ausgangszustand definiert, in dem die Flächenteile sich bei einem Abkühlvorgang definiert zurückbewegen können. Insbesondere kann ausgehend von der Ausgangslage und mithin von dem definierten Rasteingriff nach entgegengesetzten Richtungen eine Relativbewegung der Flächenteile zueinander erfolgen.

Sofern das Verbindungsteil als Federzunge ausgebildet ist, liegt diese zumindest in Teilbereichen kraftschlüssig an der Wandung des zuordenbaren Flächenteils an, so dass ein ungewolltes, selbstständiges Lösen der Verbindungseinrichtung auch in einem Vormontagezustand vermieden ist.

Weitere vorteilhafte Ausführungsformen des erfindungsgemäßen Bauteils sind Gegenstand der sonstigen Unteransprüche.

Im folgenden wird das erfindungsgemäße Bauteil anhand eines Ausführungsbeispiels nach der Zeichnung näher erläutert. Dabei zeigen in prinzipieller und nicht maßstäblicher Darstellung die
- Fig.1: eine stirnseitige Draufsicht auf ein erstes Flächenteil mit Aus- sparungen für ein jeweils zuordenbares Verbindungsteil der Verbindungseinrichtung;
- Fig.2: eine der Fig.1 entsprechende Darstellung eines weiteren zweiten Flächenteils, das mit zu den Aussparungen korre- spondierenden Verbindungsteilen in Form von Federzungen versehen ist;
- Fig.3: eine den Fig.1 und 2 entsprechende Darstellung im Zusam- menbauzustand des Bauteils, bei dem das Flächenteil der Fig.1 auf das Flächenteil nach der Fig.2 aufgelegt und derge- stalt mit diesem verbunden ist;
- Fig.4: einen Schnitt längs der Linie I - I in Fig.3;
- Fig.5: einen Schnitt längs der Linie II - II in Fig.3; und
- Fig.6: eine Seitendarstellung auf das Flächenteil nach der Fig.1, ge- sehen dort entlang der Pfeilrichtung X.

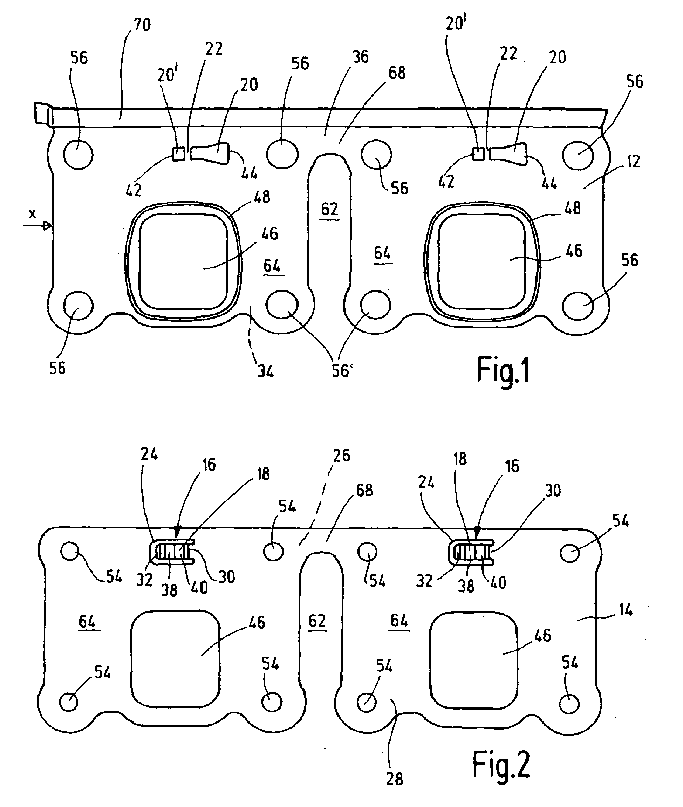

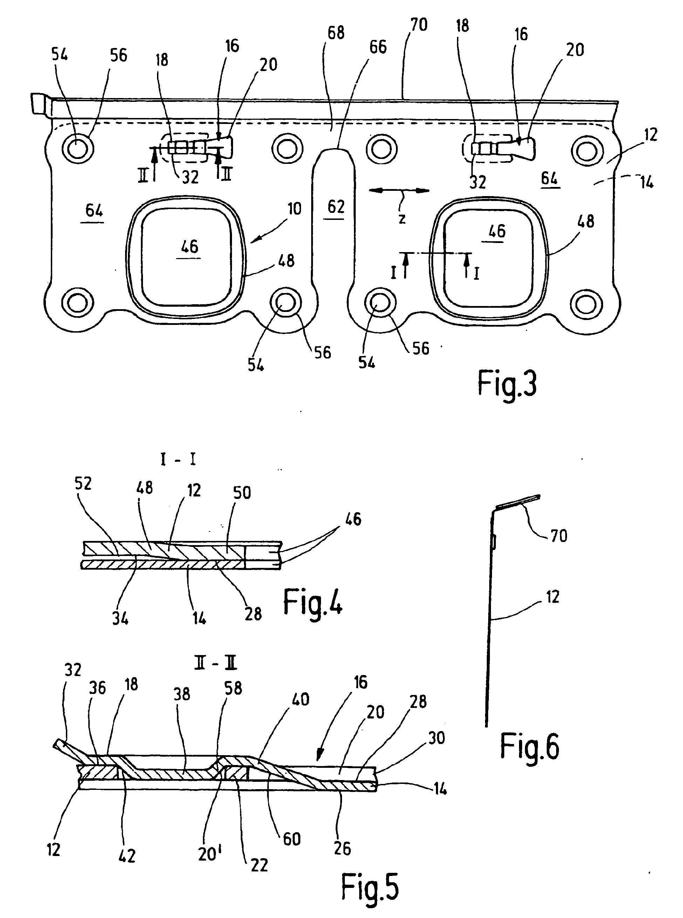

Das in der Fig.3 als Ganzes dargestellte Bauteil ist insbesondere in der Art eines Dichtteils 10 aufgebaut, bestehend aus zwei übereinanderliegenden Flächenteilen 12,14, wobei in der Fig.1 das obere Flächenteil 12 gezeigt ist, wie es auch die Fig.3 in der Ansicht wiedergibt, und das darunterliegende, untere Flächenteil 14 gemäß der Darstellung nach der Fig.2 ist im wesentlichen durch das Flächenteil 12 in der Fig.3 ganzflächig abgedeckt. Wie die

Fig.3 des weiteren zeigt, sind die beiden Flächenteile 12,14 mittels zweier als Ganzes mit 16 bezeichneter Verbindungseinrichtungen miteinander verbunden. Die jeweilige Verbindungseinrichtung 16 ist gemäß der Darstellung nach der Fig.2 an dem Flächenteil 14 festgelegt und durchgreift im Zusammenbauzustand gemäß der Darstellung nach der Fig.3 das andere Flächenteil 12 derart, dass die Flächenteile 12,14 um mindestens eine Ausgleichsstrecke relativ gegeneinander entlang von bevorzugten Verschieberichtungen, wie in der Fig.3 exemplarisch mit einem Doppelpfeil Z angedeutet, verschiebbar gehalten sind.

Die jeweilige Verbindungseinrichtung 16 weist ein Verbindungsteil in der Art einer Federzunge 18 auf, das aus dem jeweiligen einen Flächenteil 14 (vgl. Fig.2) gebildet einstückiger Bestandteil desselben ist, wobei das Verbindungsteil im Montagezustand jeweils eine zugeordnete Aussparung 20 im anderen Flächenteil 12 (vgl. Fig.1) durchgreift. Die jeweilige Aussparung 20 nach der Fig.1 weist ein Ansteuerteil in Form eines Quersteges 22 auf, das als Rastmittel in einer Ausgangslage gemäß den Darstellungen nach den Fig.3 und 5 das jeweilige Verbindungsteil in Form der Federzunge 18 in den Verschieberichtungen Z in einer lösbaren Raststellung hält und in einer nicht näher dargestellten Ausgleichslage, die von der Ausgangslage verschieden ist, unter Aufgabe der Raststellung die Relativbewegung der beiden Flächenteile 12,14 um die jeweilige Ausgleichsstrecke zuläßt, deren Wegstrecke sich aus den thermisch vorliegenden Verhältnissen ergibt.

Die Federzunge 18 ist aus dem einen Flächenteil 14 ausgeschnitten oder ausgestanzt, wobei ein U-förmiger Durchgriffsraum 24 geschaffen ist, in dem das Verbindungsteil in Form der Federzunge 18 unter Aufbieten einer Rückstellkraft eingreifen kann. Im Vormontagezustand gemäß der Darstellung nach der Fig.2 ist die jeweilige Federzunge 18 in dem zuordenbaren Durchgriffsraum 24 derart angebracht, dass die Federzunge 18 an ihrer Unterseite im wesentlichen bündig mit der Unterseite 26 des Flächenteils 14 abschließt und auf der Vorderseite 28 des Flächenteils 14 steht die Federzunge 18 zumindest teilweise mit einem gewissen Überstand vor. Ferner ist die Federzunge 18 am randseitigen Ende des Durchgriffsraums 24 über eine Anlenkstelle 30 federnd nachgiebig mit dem sonstigen Flächenmaterial des Flächenteils 14 verbunden. Befinden sich die beiden Flächenteile 12,14 in ihrer Einbaulage gemäß der Darstellung nach der Fig.3, ist nach beiden Seiten, also nach beiden Verschieberichtungen Z hin, bezogen auf die Längsausrichtung des jeweiligen Verbindungsteils in Form der Federzungen 18, dieses unter Aufgabe seiner Raststellung gemäß der Darstellung nach der Fig.5 um eine vorgebbare Ausgleichsstrecke verschiebbar geführt, wobei entlang der gesamten Ausgleichsstrecke das Ansteuerteil in Form des Quersteges 22 in Anlage mit dem Verbindungsteil bleibt.

Um den Montagezustand nach der Fig.3 zu erreichen, wird das Flächenteil 12 in Blickrichtung auf die Fig.1 gesehen, dergestalt auf das Flächenteil 14 gemäß der Darstellung nach der Fig.2 aufgesetzt, und zwar in Blickrichtung auf die Fig. 1 und 2 gesehen um eine linke Versatzstrecke, die nach rechts ausgeglichen bewirkt, dass das Verbindungsteil mit seinem freien Ende in Form eines Vorsprunges 32 zunächst von der Unterseite 34 des Flächenteils 12 kommend den rechten Teil der Aussparung 20 durchgreift, um dann nach Übergriff des Quersteges 22 auf der Oberseite 36 des Flächenteils 12 den linken Teil 20' der Aussparung zu überfahren, wobei eine dem Vorsprung 32 nachfolgende Ausprägung 38 von oben her in die Aussparung 20' eingreift. In der dahingehenden Raststellung, wie sie der Darstellung nach der Fig.5 entspricht, untergreift dann der Quersteg 22 des Flächenteiles 12 eine weitere entgegengesetzt gerichtete Ausprägung 40, die zwischen der Anlenkstelle 30 und der ersten Ausprägung 38 im Verbindungsteil in Form der Federzunge 18 angeordnet ist. Ferner ist bei der dahingehenden Raststellung nach der Fig.5 der Vorsprung 32 des Verbindungsteils an seiner Übergangsstelle zur Ausprägung 38 in stützender Anlage zu einer randseitigen Begrenzungswand 42 der Aussparung 20' gehalten. Des weiteren kann ein drittes Rastmittel durch die Anlenkstelle 30 des Verbindungsteils selbst gebildet sein, das sich in einem Montagezustand an einer weiteren Begrenzungswand 44 des Flächenteils 12 abstützen kann. Hierzu müßte in Blickrichtung auf die Fig.3 gesehen bei stationärer Lage des Flächenteils 14 das Flächenteil 12 in seine äußerst linke Lageposition verschoben werden.

Beide Flächenteile 12,14 weisen paarweise miteinander deckungsgleiche Durchgangsöffnungen 46 auf, die von einer Ringdichtung 48 abgedichtet sind. Die dahingehende Ringdichtung 48 ist mit einem Flächenbereich 50 (vgl. Schnittdarstellung nach der Fig.4) in Richtung der Durchgangsöffnung 46 vertieft ausgebildet und mithin auch im Vormontagezustand in unmittelbarer Anlage mit der Vorder- oder Oberseite 28 des Flächenteils 14, wohingegen randsbereichsnah zur Durchgangsöffnung 46 und außerhalb des Bereiches 50 die Ringdichtung 48 zumindest im Vormontagezustand teilflächenweise einen Abstand in Form eines Hohlraumes 52 zwischen Vorderseite 28 des Flächenteils 14 und Unterseite 34 des Flächenteils 12 aufweist. Dahingehende Ringdichtungen aus metallischem Werkstoff sind üblich, so dass an dieser Stelle hierauf nicht mehr näher eingegangen wird.

Die jeweilige Durchgangsöffnung 46 ist randseitig von dem Flächenmaterial des jeweiligen Flächenteils 12,14 umfaßt, das eckweise Eingriffsöffnungen 54,56 für Festlegemittel, wie nicht näher dargestellte Festlegeschrauben, aufweist, wobei der Durchmesser der Eingriffsöffnungen 54 des einen Flächenteils 14 kleiner ist als der Durchmesser der zuordenbaren Eingriffsöffnungen 56 des anderen Flächenteils 12. Dabei ist der Durchmesserunterschied zwischen den Eingriffsöffnungen 54, 56 in einer Richtung gemessen derart, dass sie jedenfalls der Länge der maximal vorgesehen Ausgleichsstrecke entspricht. Nehmen die beiden Flächenteile 12,14 ihre Einbaulage gemäß der Darstellung nach der Fig.3 ein und entspricht diese Einbaulage zunächst dem Ausgangszustand nach der Fig.5, so sind ohne weitere thermische Beanspruchung die einander zugewandten und zuordenbaren Eingriffsöffnungen 54 und 56 in koaxialer Anordnung zueinander und für einen Durchgriff eines korrespondierenden Festlegemittels, wie einer Festlegeschraube, vorgesehen. Die Schraube ist in ihren Abmessungen derart gewählt, dass das Schraubengewinde durch die Eingriffsöffnung 54 kleineren Durchmessers paßt und der Schraubenkopf ist jedenfalls derart gewählt, dass er mit einem vorgebbaren Überstand die größere Eingriffsöffnung 56 übergreifen kann. Anstelle der aufgezeigten Schraubverbindung können natürlich auch andere Festlegemittel, wie Nietverbindungen od. dgl., zum Einsatz kommen. Wichtig ist jedoch, dass das Festlegemittel derart gewählt ist, insbesondere von seinen geometrischen Abmessungen her, dass bei einer etwaigen Verschiebung der Flächenteile 12,14 zueinander die größere der Eingriffsöffnungen 56 zumindest teilweise überdeckt bleibt.

Ist das Bauteil nach der Fig.3 im Montagezustand, beispielsweise bei einem Kraftfahrzeugmotor, eingebaut und kommt es beim Betrieb des Motors zu einer Erwärmung der Flächenteile 12,14, dehnen diese sich gegebenenfalls auch in unterschiedlichem Maße entlang ihrer Flächenrichtung aus und das Flächenteilmaterial verschiebt sich unterhalb der Festlegeköpfe (Schraubenköpfe) der Festlegemittel entsprechend. Eine bevorzugte Richtung der dahingehenden thermischen Wärmeausdehnung entspricht der jeweiligen Verschieberichtung nach dem Doppelpfeil Z. Dehnen sich die Flächenteile 12,14 nun aus, wird anhand der Fig.5 deutlich, dass die Verbindungseinrichtung 16 der dahingehenden Ausgleichsbewegung nachfolgen kann, ohne dass die Verbindung zwischen den Flächenteilen 12,14 selbst beeinträchtigt wäre.

Kommt es aufgrund thermischen Einflusses (Motorwärme) zu einer relativen Verschiebebewegung der Flächenteile 12,14 zueinander in einer Richtung, bei der in Blickrichtung auf die Fig.5 gesehen das Flächenteil 14 gegenüber dem Flächenteil 12 nach rechts bewegt wird, hebt der Quersteg 22 über die Rampe 58 die Federzunge 18 an und die Unterseite der einen Ausprägung 38 kommt in Anlage mit der Oberseite des Quersteges 22. Die dahingehende Ausgleichsbewegung ist so lange möglich, bis eben über die Festlegemittel (Schrauben) der Durchmesserunterschied in mindestens einer Richtung zwischen den jeweils zuordenbaren Eingriffsöffnungen 54,56 erreicht ist, wobei in der Praxis eine dahingehende maximale Längenausdehnung nicht zwingend vorkommen muss. Die dahingehende Bewegung um die Ausgleichsstrecke, die durch die Geometrie der Federzunge 18 in Grenzen vorgebbar ist, stellt sich auch ein, wenn das Flächenteil 14 seine Lage in der Fig.5 beibehält und das andere Flächenteil 12 in Blickrichtung auf die Fig.5 gesehen sich relativ gesehen nach links bewegt.

In umgekehrter Verschieberichtung entlang des Doppelpfeils Z, wenn also beispielsweise bei stationär angeordnetem Flächenteil 12 sich das Flächenteil 14 in Blickrichtung auf die Fig.5 gesehen nach links bewegt, fährt die Oberseite des Quersteges 22 entlang der weiteren Rampe 60 im Bereich der zweiten Ausprägung 40, so dass insoweit gleichfalls eine Ausgleichsbewegung solange möglich ist, gegebenenfalls unter Bewegung der Federzunge 18, bis der rampenartige Anstieg 60 derart steil wird, dass eine definierte Rückhaltekraft definiert ist, die die Flächenteile 12,14 in Richtung ihrer Ausgangslage nach der Fig.5 zu "ziehen" sucht. Wie die obigen Ausführungen verdeutlichen, ist somit über die Verbindungseinrichtung entlang der Doppelpfeilrichtung Z eine Ausgleichsstrecke geschaffen, die thermische Ausdehnungen ermöglicht, wobei durch reibschlüssiges Abgleiten der Flächenteile 12,14 aneinander schädigende Krafteinleitungen in den Bereich der Ringdichtung 48 ebenso vermieden sind wie im Bereich der Festlegestellen über die Eingriffsöffnungen 54,56. Insbesondere kann die Ringdichtung 48 der dahingehenden Verschiebebewegung jeweils nachfolgen, da gemäß der Schnittdarstellung nach der Fig.4 die Dichtung derart gewählt ist, dass bündig die Flächenteile 12,14 gleichfalls über ihre zugewandten Seiten 28,34 abgleiten können. Da die Längsausgleichsmöglichkeit nicht nur in der Längsachse der jeweiligen Verbindungseinrichtung 16 wirkt, sondern den gesamten Flächenbereich der Flächenteile 12,14 abdecken kann, ist insoweit eine sichere Kompensationsmöglichkeit geschaffen, auch wenn gegebenenfalls in anderen Richtungen aufgrund von Wärmespannungen Kräfte- oder Spannungsspitzen auftreten sollten.

Eine weitere Entkopplung ist bei der gezeigten Lösung nach Fig.3 dadurch vorhanden, dass in die beiden Flächenbereiche 12,14 ein Mittenkorridor 62 eingebracht ist, der beidseitig gegenüberliegende Flächenbereiche 64 der beiden Flächenteile 12,14 voneinander entkoppelt. Der angesprochene Mittenkorridor 62 durchgreift dabei in Querrichtung die Flächenteile 12,14 derart, bis er mit seinem Grund 66 an die gemeinsame Längsachse der beiden Verbindungseinrichtungen 16 anstößt. Dergestalt ist über den Mittenkorridor 62 eine Spaltausgleichsbewegung möglich, bei der in vorgebbaren Grenzen der Spalteingang des Korridors 64, der gegenüberliegend dem Grund 66 angeordnet ist, unter Wärme sich erweitern kann. Bei Abkühlung versuchen dann die Flächenteile 12,14 ihren jeweiligen Ausgangszustand wieder einzunehmen, bei dem dann auch der Mittenkorridor 62 seine Ausgangslage nach den Fig. 1,2 und 3 wieder einnimmt. Ferner kann in der Stegfläche 68, die an den Grund 66 anschließt, eine weitere, nicht näher dargestellte, beispielsweise balgartige Kompensatoreinrichtung vorhanden sein, die zusätzlich dem Längenausgleich bei Wärmeeintrag dient. Die in den Figuren gezeigte Lösung kann unter Wegfall des Mittenkorridors 62 für nur eine Durchgangsöffnung 46 vorgesehen sein; vorzugsweise werden jedoch, wie dargestellt, mehrere Durchgangsöffnungen, auch mehr als zwei Durchgangsöffnungen 46, mit entsprechenden Ringdichtungen 48 sowie der beschriebenen thermischen Ausgleichsmöglichkeit versehen. Gemäß den Darstellungen nach den Fig.1,3 und 6 weist in Blickrichtung auf die Figuren das Flächenteil 12 an seiner Oberseite, abgekantet ein weiteres Flächenteil 70 auf, das insbesondere der thermischen Abschirmung bei Hitzeeintrag dienen kann. Die Flächenteile 12,14 sind als Blechzuschnitte oder als Blechumformteile ausgebildet und einlagig. Die erfindungsgemäße Ausgleichseinrichtung läßt sich aber auch gegebenenfalls für mehrlagige Flächenteile einsetzen. Das abgekantet aufgesetzte Flächenteil 70 kann auch dazu dienen, weitere, nicht näher dargestellte Hitzeschilder mit dem genannten Bauteil zu verbinden. Auch kann das Bauteil selbst in der Art eines Hitzeschildes ausgebildet sein und dann die Hitzeschildfunktion mit einer Fluidabdichtfunktion verbinden.

Die erfindungsgemäße Lösung soll insbesondere zur Abdichtung des Bereiches zwischen dem Kopf einer Motoreinheit und dem Leitungssystem eines

Abgaskrümmers eingesetzt werden. Aufgrund des Mittenkorridors 62 mit Steganordnung 68 ist darüber hinaus sichergestellt, dass eingeleitete Vibrationen weitgehend im jeweiligen Flächenbereich 64 verbleiben und nicht in andere benachbarte Flächenbereiche ohne weiteres überwechseln. Um einen lang andauernden Funktionsbetrieb des Bauteils sicherstellen zu können, sind die einander zugewandten Wandteile der Flächenteile 12,14 mit einer abriebfesten Beschichtung versehen, wobei es genügt, ein Wandteil eines Flächenteils 12 oder 14 mit einer dahingehenden Beschichtung auszustatten (nicht dargestellt).

## Patentansprüche

1. Bauteil, insbesondere Dicht(10)- und/oder Abschirmteil, bestehend aus zumindest teilweise übereinanderliegenden Flächenteilen (12, 14), die zumindest teilweise mittels mindestens einer Verbindungseinrichtung (16) miteinander verbunden sind, wobei die jeweilige Verbindungseinrichtung (16) an einem Flächenteil (14) festgelegt ist und das andere Flächenteil (12) derart durchgreift und mit diesem in Eingriff steht, dass zumindest teilweise die Flächenteile (12, 14) um mindestens eine Auslgeichsstrecke relativ gegeneinander entlang von Verschieberichtungen (Z) verschiebbar gehalten sind, wobei die jeweilige Verbindungseinrichtung (16) ein Verbindungsteil aufweist, das aus dem jeweiligen einen Flächenteil (14) gebildet einstückiger Bestandteil desselben ist und aus einer zumindest teilweise aus dem Flächenteil (14) ausgebogenen Federzunge (18) besteht, welche eine zugeordnete Aussparung (20, 20') im anderen Flächenteil (12) durchgreift, **dadurch gekennzeichnet, dass** die Aussparung (20, 20') des anderen Flächenteils (12) einen Quersteg (22) aufweist, dass der Quersteg (22) die Aussparung (20, 20') zumindest teilweise quer zur Längsausrichtung des Verbindungsteils durchgreift und als Rastmittel in einer Ausgangslage die Federzunge zumindest in einer Verschieberichtung (Z) in einer lösbaren Raststellung hält und in einer Ausgleichslage unter Aufgabe der Raststellung die Relativbewegung um die Ausgleichsstrecke zulässt.

2. Bauteil nach Anspruch 1, **dadurch gekennzeichnet, dass** nach beiden Seiten (Verschieberichtungen Z) der Längsausrichtung des jeweiligen Verbindungsteils (18) dieses unter Aufgabe seiner Raststellung um die Ausgleichsstrecke verschiebbar geführt ist und dass entlang der gesamten Ausgleichsstrecke der Quersteg (22) in Anlage mit dem Verbindungsteil bleibt.

3. Bauteil nach Anspruch 2, **dadurch gekennzeichnet, dass** das Verbindungsteil in zwei Funktionsbereiche unterteilt ist, die in zwei verschiedenen Richtungen und in zur Längsausrichtung des Verbindungsteils hintereinander angeordnete Ausprägungen (38, 40) aufweisen, von denen zwei benachbarte, bezogen auf die Ausgangslage des Ansteuerteils jedenfalls der einen der beiden Verschieberichtungen zugeordnet ist.

4. Bauteil nach Anspruch 3, **dadurch gekennzeichnet, dass** der Quersteg die Aussparung (20, 20') derart unterteilt, dass in der Ausgangslage die eine Ausprägung (38) in den ihr zuordenbaren einen Teilraum (20') der Aussparung eingreift und die andere Ausprägung (40) in den anderen benachbarten Teilraum (20) der Aussparung.

5. Bauteil nach Anspruch 3 oder 4, **dadurch gekennzeichnet, dass** das Verbindungsteil an seinem freien Ende einen Vorsprung (32) aufweist, der in derselben Richtung wie die Ausprägung (40) vorspringt, die der Anlenkstelle (30) des Verbindungsteils an dem einen Flächenteil (14) zugewandt ist, und dass der dahingehende Vorsprung (32) als weiteres Rastmittel sich in der Ausgangslage an der Begrenzungswand (42) der Aussparung (20') des anderen Flächenteils (12) abstützt.

6. Bauteil nach Anspruch 5, **dadurch gekennzeichnet, dass** ein drittes Rastmittel durch die Anlenkstelle (30) des Verbindungsteils an dem einen Flächenteil (14) gebildet ist, das in der anderen der beiden Verschieberichtungen (Z) eine Abstützung für das Verbindungsteil bildet.

7. Bauteil nach einem der Ansprüche 1 bis 6, **dadurch gekennzeichnet, dass** beide Flächenteile (12, 14) eine miteinander deckungsgleiche Durchgangsöffnung (46) aufweisen, die von mindestens einer Ringdichtung (48) abgedichtet ist.

8. Bauteil nach Anspruch 7, **dadurch gekennzeichnet, dass** die Ringdichtung (48) mit einem Flächenbereich (50) in Richtung der Durchgangsöffnung (46) vertieft ausgebildet ist und in der anderen Richtung zumindest im Vormontagezustand und zumindest randbereichsnah zur Durchgangsöffnung (46) teilflächenweise einen Abstand (52) zu dem jeweils benachbarten Flächenteil (12, 14) aufweist.

9. Bauteil nach Anspruch 8, **dadurch gekennzeichnet, dass** die beiden benachbarten Flächenteile (12, 14) einander zugewandte Eingriffsöffnungen (54, 56) für Festlegemittel, wie Schrauben, aufweisen, dass der Durchmesser der Eingriffsöffnungen (54) des einen Flächenteils (14) kleiner ist als der Durchmesser der zuordenbaren Eingriffsöffnungen (56) des anderen Flächenteils (12), und dass der Durchmesserunterschied in einer Richtung gemessen mindestens der Länge der maximal vorgesehenen Ausgleichsstrecke entspricht.

10. Bauteil nach einem der Ansprüche 1 bis 9, **dadurch gekennzeichnet, dass** die eingesetzten Flächenteile (12, 14) als Blechzuschnitte oder als Blechumformteile ausgebildet sind.

11. Bauteil nach einem der Ansprüche 1 bis 10, **dadurch gekennzeichnet, dass** zumindest ein weiteres Flächenteil (70) als Hitzeschild dient oder dass dahingehende Hitzeschilder mit mindestens einem der Flächenteile (12, 14) in Wirkverbindung stehen, vorzugsweise mit dem jeweiligen einstückig verbunden sind.

## Claims

1. Component, in particular a sealing (10) and/or shielding part, consisting of flat parts (12, 14) lying at least partially on top of one another and being connected to one another at least partially by means of at least one connecting device (16), wherein the respective connecting device (16) is secured to one flat part (14) and passes through the other flat part (12) and is in engagement with it in such a manner that the flat parts (12, 14) are held at least partially so as to be displaceable over at least a compensatory distance relative to one another along directions of displacement (Z), wherein the respective connection device (16) has a connecting part formed from the one respective flat part (14) as an integral part thereof and consisting of a flexible tongue (18) bent at least partially out of the flat part (14), said tongue passing through an associated cutout (20, 20') in the other flat part (12), **characterized in that** the cutout (20, 20') of the other flat part (12) has a transverse web (22), that the transverse web (22) passes at least partially through the cutout (20, 20') transversely to the longitudinal alignment of the connecting part and as locking means in a starting position holds the flexible tongue in a releasable locking position at least in one direction of displacement (Z) and in a compensatory position allows the relative movement over the compensatory distance by relinquishing the locking position.

2. Component as defined in claim 1, **characterized in that** on both sides (directions of displacement Z) of the longitudinal alignment of the respective connecting part (18) this is guided for displacement over the compensatory distance while relinquishing its locking position and that the transverse web (22) remains in engagement with the connecting part along the entire compensatory distance.

3. Component as defined in claim 2, **characterized in that** the connecting part is subdivided into two functional areas having protrusions (38, 40) arranged in two different directions and one behind the other in relation to the longitudinal alignment of the connecting part, two adjacent ones thereof, in relation to the starting position of the control section, being associated in any case with one of the two directions of displacement.

4. Component as defined in claim 3, **characterized in that** the transverse web subdivides the cutout (20, 20') in such a manner that in the starting position the one protrusion (38) engages in the partial space (20') of the cutout associatable with it and the other protrusion (40) engages in the other adjacent partial space (20) of the cutout.

5. Component as defined in claim 3 or 4, **characterized in that** the connecting part has at its free end a projection (32) projecting in the same direction as the protrusion (40) facing the point of articulation (30) of the connecting part on the one flat part (14) and that the said projection (32) is supported in the starting position on the boundary wall (42) of the cutout (20') of the other flat part (12) as additional locking means.

6. Component as defined in claim 5, **characterized in that** a third locking means is formed by the point of articulation (30) of the connecting part on the one flat part (14) forming a support for the connecting part in the other one of the two directions of displacement (Z).

7. Component as defined in any one of claims 1 to 6, **characterized in that** both flat parts (12, 14) have an opening (46) congruent with one another, said opening being sealed by at least one ring seal (48).

8. Component as defined in claim 7, **characterized in that** the ring seal (48) is of a recessed design with a surface area (50) in the direction of the opening (46) and in the other direction is at a distance (52) to the respectively adjacent flat part (12, 14) in certain partial surface areas at least in the preassembled state and at least close to the edge area of the opening (46).

9. Component as defined in claim 8, **characterized in that** the two adjacent flat parts (12, 14) have access openings (54, 56) facing one another for securing means, such as screws, that the diameter of the access openings (54) of the one flat part (14) is smaller than the diameter of the assocatiable access openings (56) of the other flat part (12) and that the difference in diameter measured in one direction corresponds at least to the length of the maximum compensatory distance provided.

10. Component as defined in any one of claims 1 to 9, **characterized in that** the flat parts (12, 14) used are designed as sheet metal blanks or as sheet metal shaped parts.

11. Component as defined in any one of claims 1 to 10, **characterized in that** at least one additional flat part (70) serves as a heat shield or that such heat shields are in operative connection with at least one of the flat parts (12, 14), are preferably connected in one piece to the respective one.

## Revendications

1. Élément, en particulier pièce d'étanchéité (10) et/ou de protection, constitué de pièces planes (12, 14) superposées du moins en partie, qui sont reliées les unes aux autres du moins en partie au moyen d'au moins un dispositif de liaison (16), le dispositif de liaison (16) correspondant étant fixé à une pièce plane (14) et traversant l'autre pièce plane (12) et étant en prise avec celle-ci de telle sorte que les pièces planes (12, 14) sont maintenues du moins en partie déplaçables sur au moins un trajet de compensation de manière relative l'une par rapport à l'autre le long de directions de déplacement (Z), le dispositif de liaison (16) correspondant présentant une pièce de liaison qui, formée de la pièce plane (14) correspondante, fait partie intégrante de cette dernière et se compose d'une languette ressort (18) coudée du moins en partie à partir de la pièce plane (14), laquelle languette traverse un évidement (20, 20') affecté dans l'autre pièce plane (12), **caractérisé en ce que** l'évidement (20, 20') de l'autre pièce plane (12) présente une entretoise (22), **en ce que** l'entretoise (22) traverse l'évidement (20, 20') du moins en partie transversalement à l'orientation longitudinale de la pièce de liaison et retient en tant que moyen d'arrêt dans une position de départ la languette ressort du moins dans une direction de déplacement (Z) dans une position d'arrêt libérable et permet dans une position de compensation en quittant la position d'arrêt, le mouvement relatif sur le trajet de compensation.

2. Élément selon la revendication 1, **caractérisé en ce que** la pièce de liaison est guidée en quittant sa position d'arrêt de manière déplaçable sur le trajet de compensation vers les deux côtés (directions de déplacement Z) de l'orientation longitudinale de la pièce de liaison (18) correspondante et **en ce que** l'entretoise (22) reste en contact avec la pièce de liaison tout au long du trajet de compensation.

3. Élément selon la revendication 2, **caractérisé en ce que** la pièce de liaison est divisée en deux zones fonctionnelles, qui présentent des reliefs (38, 40) disposés les uns derrière les autres dans deux directions différentes et dans le sens longitudinal de la pièce de liaison, dont deux reliefs adjacents, par rapport à la position de départ de l'élément de commande, sont affectés dans tous les cas à l'une des deux directions de déplacement.

4. Élément selon la revendication 3, **caractérisé en ce que** l'entretoise divise l'évidement (20, 20') de telle sorte que dans la position de départ l'un des reliefs (38) vient en prise dans la partie d'espace (20') de l'évidement qui lui est affectable et l'autre relief (40) dans l'autre partie d'espace (20) adjacente de l'évidement.

5. Élément selon la revendication 3 ou 4, **caractérisé en ce que** la pièce de liaison présente à son extrémité libre une saillie (32) qui fait saillie dans la même direction que le relief (40) qui est tourné vers le point d'articulation (30) de la pièce de liaison au niveau de l'une des pièces planes (14) et **en ce que** la saillie (32) correspondante s'appuie en tant qu'autre moyen d'arrêt dans la position de départ au niveau de la paroi de délimitation (42) de l'évidement (20') de l'autre pièce plane (12).

6. Élément selon la revendication 5, **caractérisé en ce qu'**un troisième moyen d'arrêt est formé par le point d'articulation (30) de la pièce de liaison au niveau de l'une des pièces planes (14) qui forme dans l'autre des deux directions de déplacement (Z) un appui pour la pièce de liaison.

7. Élément selon l'une quelconque des revendications 1 à 6, **caractérisé en ce que** les deux pièces planes (12, 14) présentent une ouverture traversante (46) coïncidant l'une avec l'autre qui est rendue étanche par au moins un joint annulaire (48).

8. Élément selon la revendication 7, **caractérisé en ce que** le joint annulaire (48) est encastré avec une zone plane (50) en direction de l'ouverture traversante (46) et présente dans l'autre direction du moins dans l'état de prémontage et du moins à proximité de la zone de bord de l'ouverture traversante (46) sur une partie de la surface une distance (52) par rapport à la pièce plane (12, 14) respectivement adjacente.

9. Élément selon la revendication 8, **caractérisé en ce que** les deux pièces planes (12, 14) adjacentes présentent des ouvertures de prise (54, 56) tournées les unes vers les autres pour des moyens de fixation, comme des vis, **en ce que** le diamètre des ouvertures de prise (54) de l'une des pièces planes (14) est inférieur au diamètre des ouvertures de prise (56) affectables de l'autre pièce plane (12) et **en ce que** la différence de diamètre mesurée dans une direction correspond au moins à la longueur du trajet de compensation maximum prévu.

10. Élément selon l'une quelconque des revendications 1 à 9, **caractérisé en ce que** les pièces planes (12, 14) employées sont réalisées sous forme de pièces de tôle découpées ou sous forme de pièces de tôle formées.

11. Élément selon l'une quelconque des revendications 1 à 10, **caractérisé en ce qu'**au moins une autre pièce plane (70) sert d'écran thermique ou **en ce que** des écrans thermiques correspondants sont en liaison active avec au moins l'une des pièces planes (12, 14), de préférence reliés d'un seul tenant avec la pièce plane correspondante.
